# FASCICULE DE BREVET EUROPEEN

(11) **EP 1 253 504 B1**
(45) Date de publication et mention de la délivrance du brevet: **07.11.2007**
(21) Numéro de dépôt: 02015065.2
(22) Date de dépôt: 18.10.1993
(51) Int. Cl.: G06F 21/00

(54) **Procédé d'utilisation de logiciels et systeme informatique pour mettre en oeuvre le procédé**
Verfahren zur Anwendung von Software und Informationssystem zur Anwendung dieses Verfahrens
Procedure for use of software and information system for applying this procedure

(30) Priorité: 23.10.1992 FR 9212702
(43) Date de publication de la demande: 30.10.2002
(62) Demande divisionnaire de: 93402559.4
(73) Titulaire: GEMPLUS, 13420 Gémenos (FR)
(72) Inventeur: Leroux, Jean-Yves, 13600 La Ciotat (FR)

(56) Documents cités:
- EP-A- 0 421 409
- EP-A- 0 456 920

## Description

L'invention concerne un procédé d'acquisition de logiciels par des micro-ordinateurs.

L'invention concerne également un système informatique d'acquisition de logiciels.

L'invention s'applique notamment aux micro-ordinateurs dits portables ou de poche, c'est-à-dire aisément transportables et pouvant travailler en alimentation autonome (piles, batteries).

Pour obtenir une autonomie de plusieurs heures, il a fallu supprimer dans ces micro-ordinateurs, les organes fortement consommateurs. Notamment, le disque dur a été remplacé par de la mémoire purement électronique, et les lecteurs de disquettes magnétiques ont été remplacés par des lecteurs de cartes à mémoire de masse amovibles. Ces cartes à mémoire sont appelées parfois PC-cards en littérature anglo-saxonne, ou encore cartes PCMCIA, du nom de la norme correspondante ("Personal Computer Memory Card International Association" 1030B East Duane Avenue, Sunnyvale, California). Ces cartes comportent plusieurs puces de mémoire et un connecteur en bout de carte (connecteur femelle de 68 broches) enfichable dans un connecteur correspondant du lecteur du micro-ordinateur. Les connexions sont telles que la mémoire peut être adressée par un port d'entrée-sortie parallèle du micro-ordinateur. Ces cartes ont un encombrement réduit : elles ont le format d'une carte de crédit avec une épaisseur de 3 à 5 millimètres, et elles sont d'accès très rapide. Enfin, leur capacité mémoire totale peut atteindre plusieurs dizaines de mégaoctets.

Par ailleurs, pour protéger un ordinateur contre une utilisation par un utilisateur non-habilité, certains micro-ordinateurs comportent aussi un lecteur de carte à puce. La sécurité consiste à empêcher l'utilisation du micro-ordinateur si l'utilisateur ne fournit pas les codes de confidentialité adéquats, ou s'il n'insère pas de carte à puce dans ce lecteur.

La distribution de logiciels applicatifs sur les micro-ordinateurs se fait habituellement par les disquettes magnétiques. Dans le cas de ces micro-ordinateurs portables qui ne comportent plus les lecteurs de disquettes magnétiques, mais les lecteurs de cartes PCMCIA, ces dernières sont utilisées pour assurer la distribution des logiciels applicatifs: un utilisateur achète à un vendeur une carte PCMCIA sur laquelle le logiciel applicatif est chargé.

Mais en pratique, les cartes PCMCIA à mémoire de masse coûtent très chers, jusqu'à quelques milliers de francs selon la capacité mémoire, ce qui rend le moindre logiciel applicatif hors de prix.

La demande de brevet européen référencée EP A 0 421 409 décrit un système de transactions sécurisé dans lequel chaque commande est vérifiée à l'aide d'une carte à puce.
La demande de brevet européen référencée EP A 0 456 920 expose la gestion de l'exécution d'un élément déporté dans un système distribué de traitement de données et des droits qui y sont associés.
Il est connu du brevet américain référencé US 494 1175 un système de gestion d'accès conjoint à une même ressource logicielle. Le document référencé US 494 1175 permet de verrouiller le nombre d'utilisateurs ayant un accès concomitant à une même ressource logicielle.

La présente invention a pour objet un nouveau procédé d'acquisition de logiciels par des micro-ordinateurs.

Dans l'invention, on propose d'utiliser un serveur de base de données dans lequel seront stockés des logiciels applicatifs à distribuer et un support de mémoire électronique amovible contenant des droits d'accès à des logiciels pour permettre le téléchargement des logiciels applicatifs vers un micro-ordinateur.

En effet la plupart des micro-ordinateurs contiennent ou peuvent contenir des cartes ayant des fonctions de communication entre le micro-ordinateur et l'extérieur. Ces cartes sont appelées cartes à fonction Entrée/Sortie. Un exemple typique est le modem, qui est raccordé par un premier connecteur au micro-ordinateur et par un deuxième connecteur à une ligne téléphonique pour l'envoi ou la réception de données numériques sur la ligne. Dans un autre exemple de carte à fonction de communication, la communication avec l'extérieur se fait non pas par un connecteur à contacts matériels, mais par transmission hertzienne. Ces cartes peuvent être connectées sur un port d'entrée/sortie du micro-ordinateur ou directement montées à l'intérieur du micro-ordinateur.

Selon l'invention, des logiciels applicatifs sont chargés sur un serveur de base de données auquel peuvent être connectés des micro-ordinateurs par une telle carte à fonction Entrée/Sortie. Des supports de mémorisation amovibles, comportant très peu de mémoire, sont délivrés (vendus) aux utilisateurs, ces supports contenant un droit d'accès à au moins un logiciel applicatif. Dans ce cas, un tel support qui ne comporte pratiquement pas de mémoire a un coût réduit à une vingtaine de francs au maximum. Les informations stockées n'utilisent que quelques octets. Le support peut être par exemple une carte à puce du type carte de crédit, ou encore une carte PCMCIA avec une mémoire très réduite, le micro-ordinateur comportant les lecteurs correspondant à ces cartes.

Lorsqu'un utilisateur d'un micro-ordinateur veut acquérir un logiciel applicatif, il achète alors le support comportant le droit d'accès à ce logiciel. Le prix du support acheté correspondra au prix de vente du logiciel ajouté à celui du support qui n'est plus que d'une vingtaine de francs environ. L'utilisateur insère ensuite le support dans le lecteur du micro-ordinateur. Il se connecte sur le serveur et sélectionne, par exemple, au moyen de l'écran et du clavier du micro-ordinateur, le logiciel applicatif désiré. Le serveur va alors contrôler le droit d'accès dans le support, via le micro-ordinateur, puis transférer le logiciel applicatif vers le micro-ordinateur, par exemple dans sa mémoire interne.

De façon plus précise, le procédé d'acquisition de logiciels selon l'invention est principalement caractérisé par les étapes suivantes :
- dans une première étape, des logiciels sont chargés sur un serveur de base de données auquel peuvent être - connectés des micro-ordinateurs aptes à recevoir des supports de mémorisation amovibles et à délivrer des supports de mémorisation amovibles contenant au moins un droit d'accès à un logiciel du serveur, sont délivrés à des utilisateurs des micro-ordinateurs,
- dans une deuxième étape, l'utilisateur d'un micro-ordinateur introduit le support de mémorisation qu'il détient et un logiciel désiré du serveur et autorisé par le support est téléchargé vers le micro-ordinateur.

Dans un exemple, le logiciel est téléchargé en mémoire interne. Il peut aussi être téléchargé sur une carte PCMCIA, quand le micro-ordinateurs dispose d'un nombre de lecteurs suffisant.

Le temps de téléchargement du logiciel ne dépend que de la taille du logiciel et des caractéristiques de transmission (format, débit) de la liaison micro-ordinateur/serveur (liaison modem, réseau sans fil, etc.).

Selon une autre caractéristique de l'invention, le droit d'accès est contrôlé par le serveur en utilisant des procédés de sécurité avec identification et algorithmes de chiffrement/déchiffrement. Le support de mémorisation comporte à cet effet un module électronique de sécurité qui le rend inviolable. Il est en effet nécessaire d'empêcher les fraudeurs de pirater les informations contenues dans les supports, ce qui permettrait de télécharger des logiciels sans en avoir payé le prix, en réalisant des supports frauduleux.

Par module électronique de sécurité, on entend ici une puce de circuit intégré comportant une mémoire non-volatile avec des informations confidentielles, et une circuiterie de sécurité programmée, apte à utiliser ces informations confidentielles et d'autres informations fournies par l'utilisateur, pour délivrer des instructions de validation, après vérification d'une relation prédéterminée entre ces deux types d'information. Les données confidentielles ne sortent pas du module de sécurité.

Selon un autre aspect de l'invention, l'utilisation même des logiciels applicatifs est sécurisée. Le procédé est alors principalement caractérisé comme suit:
- on délivre à un utilisateur un support de mémorisation amovible contenant des droits d'utilisation, propres à au moins un logiciel du serveur et autorisant le téléchargement du ou des logiciels correspondants;
- l'utilisateur doit alors introduire le support de mémorisation contenant les droits d'utilisation propres au logiciel qu'il désire télécharger et qu'il veut faire exécuter. Le logiciel téléchargé est en effet avantageusement autosécurisé, son exécution comprenant des accès au support de mémorisation pour contrôler les droits d'utilisation secrètes et autoriser ou non la suite de l'exécution.

D'autres particularités et avantages de l'invention apparaîtront à la lecture de la description qui est faite à titre indicatif et non-limitatif de l'invention et en référence au dessin annexé dans lequel:

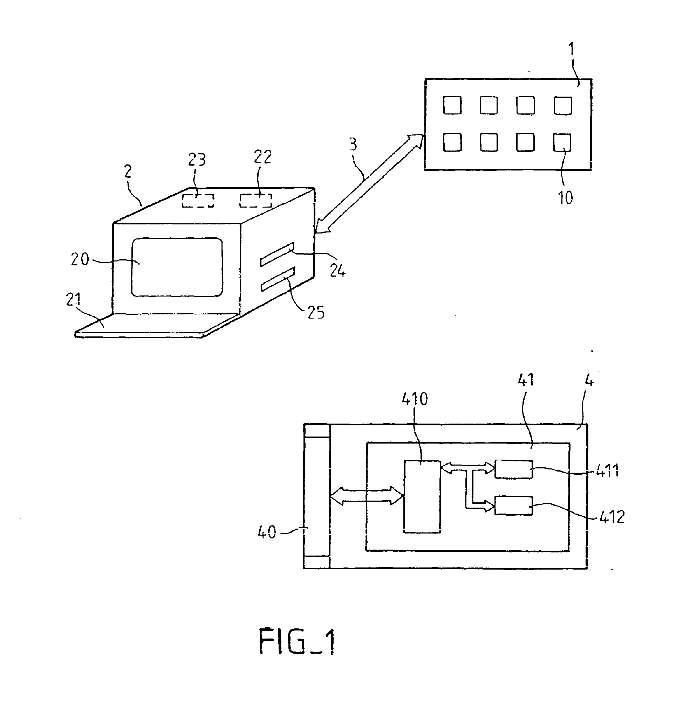

- la figure 1 représente un schéma d'un système informatique selon l'invention.

Un système informatique conforme à l'invention est représenté sur la figure 1. Il comprend un serveur de base de données 1, dans lequel sont stockés des logiciels applicatifs 10, un micro-ordinateur 2 connecté au serveur par une interface 3 - réseau téléphonique, radiotéléphonique ou autres - et un support de mémorisation électronique amovible 4.

Le micro-ordinateur comprend: un écran 20, un clavier 21, qui peut être remplacé par un crayon ou tout autre interface homme-machine existante, une unité centrale 22, une mémoire interne 23 et un lecteur 24 de support de mémorisation électronique amovible.

Le support de mémorisation comporte une interface 40 de connexion au lecteur 24 du micro-ordinateur, une puce électronique de mémoire non-volatile 41. Le support de mémorisation contient en mémoire 41 des informations secrètes correspondant à un droit d'accès à un ou plusieurs logiciels applicatifs stockés dans le serveur 1. Ces supports sont, en pratique, vendus par le vendeur distributeur des logiciels applicatifs considérés.

Pour procéder à l'acquisition d'un logiciel applicatif, l'utilisateur qui détient un support contenant le droit d'accès correspondant, doit l'introduire dans le lecteur 24 du micro-ordinateur. Puis, l'utilisateur lance sur le micro-ordinateur un logiciel de connexion sur le serveur. Lorsque la communication avec le serveur est établie, ce dernier affiche sur l'écran du micro-ordinateur un menu grâce auquel l'utilisateur choisit le(les) logiciel(s) applicatif(s) qu'il veut acquérir. Le serveur va alors contrôler le droit d'accès à ces logiciels en interrogeant le support via l'unité centrale du micro-ordinateur. Ce contrôle est avantageusement effectué en utilisant des procédés de sécurité semblables à ceux utilisés dans les cartes à puce (cartes de crédit), c'est-à-dire avec procédure d'identification authentification, utilisant des algorithmes de chiffrement, déchiffrement. Les informations secrètes ne sont pas transmises à l'extérieur du support. La puce électronique de mémoire non-volatile 41 comprend alors une circuiterie de sécurité programmée pour assurer ces fonctions de sécurité.

Si le contrôle de sécurité est positif, le serveur effectue le téléchargement du (ou des) logiciel(s) applicatif(s) sélectionné(s) et autorisé(s) par le support, dans la mémoire interne du micro-ordinateur. En option, il peut être prévu, pour un micro-ordinateur comportant au moins deux lecteurs de supports de mémorisation électronique 24 et 25 amovibles, que l'utilisateur puisse choisir où le logiciel doit être téléchargé: en mémoire interne 23 du micro-ordinateur ou sur un support amovible 5 qui comprend une puce électronique 50 de mémoire vive, par exemple. Le logiciel téléchargé est alors exécutable par le micro-ordinateur.

Or, on peut imaginer qu'au moment du téléchargement, un fraudeur ait pu mémoriser le logiciel. De préférence, on choisira une procédure de téléchargement codée. Mais avantageusement, pour sécuriser le procédé de l'invention, il est prévu un support de mémorisation électronique amovible à introduire dans le lecteur au moment de l'exécution du logiciel applicatif et contenant des données secrètes correspondant à des droits d'utilisation connues du logiciel. Ce dernier, lors de son exécution, vient interroger de temps à autre le support de mémorisation afin de contrôler que les droits d'utilisation sont présents. Ce contrôle se fera, de préférence, en utilisant les procédés de sécurité connues et notamment les algorithmes de chiffrement-déchiffrement. Le support de mémorisation contient une puce de sécurité à cet effet.

Avantageusement, le même support de mémorisation 4 contient les droits d'accès à un logiciel applicatif et les droits d'utilisation correspondants dans la même puce électronique 41.

D'autres options sont envisageables. Par exemple, il peut être prévu que le logiciel applicatif soit vendu pour un nombre limité d'utilisations. La puce électronique comportera alors, par exemple, un compteur contenant cette information. Une tâche du logiciel applicatif comportera par exemple les étapes suivantes :
- aller lire sur le support de mémorisation amovible 4, une information indiquant si le logiciel a été acquis pour un nombre limité d'utilisations. Si non, cette tâche est terminée et l'exécution continue;
- si oui, envoyer un ordre de décrémentation. La puce électronique contrôle en interne le contenu du compteur et s'il n'est pas nul, renvoie un acquittement vers les micro-ordinateurs. Le logiciel peut continuer l'exécution;
- mais si le compteur est nul, il renvoie un message d'erreur par exemple, et le logiciel est stoppé dans son exécution.

Dans un exemple d'application pratique, le support mémoire amovible 4 est une carte à puce, ou une carte PCMCIA ne contenant que la puce électronique nécessaire à l'application. Le micro-ordinateur sera équipé de lecteurs correspondants pour lire de telles cartes. La puce électronique 41, comporte, par exemple, une circuiterie 410 de sécurité programmée, une circuiterie 411 de mémoire non-volatile et un compteur 412.

La circuiterie 410 de sécurité contrôle l'accès à la mémoire et au compteur, et gère les accès externes au support.

## Revendications

1. Procédé sécurisé d'utilisation d'un logiciel (10) sur un micro-ordinateur (2) consistant à introduire un support de mémorisation électronique amovible (4) contenant des données secrètes correspondant à des droits d'utilisation du logiciel dans le micro-ordinateur (2), **caractérisé en ce qu**'il consiste à exécuter le logiciel (10) en interrogeant de temps à autre le support de mémorisation (4) afin de contrôler les droits d'utilisation.

2. Procédé sécurisé d'utilisation d'un logiciel (10) selon la revendication 1, **caractérisé en ce que** le support de mémorisation électronique amovible (4) contient en outre les droits d'accès au logiciel (10) afin de le télécharger depuis un serveur (1) avant son utilisation.

3. Procédé sécurisé d'utilisation d'un logiciel (10) selon l'une des revendications précédentes, **caractérisé en ce que** le support de mémorisation amovible (4) comporte un compteur indiquant un nombre limité d'utilisations autorisées, ce compteur étant décrémenté à l'exécution du logiciel (10), le support (4) vérifiant l'état du compteur pour autoriser ou non l'exécution du logiciel (10).

4. Support amovible de mémorisation électronique (4) **caractérisé en ce qu**'il comprend des données secrètes correspondant à des droits d'utilisation d'un logiciel (10) et en ce qu'il est apte à autoriser ou non l'exécution d'un logiciel (10) au sein d'un micro-ordinateur (2) en fonction de ces droits en interrogeant de temps à autre le support de mémorisation (4) afin de contrôler les droits d'utilisation.

5. Support amovible de mémorisation électronique (4) selon la revendication 4 **caractérisé en ce qu'**il comprend en outre des droits d'accès à un logiciel (10) afin d'autoriser ou non son téléchargement depuis un serveur (1) dans un micro-ordinateur (2).

6. Support amovible de mémorisation électronique (4) selon l'une des revendications 4 ou 5, **caractérisé en ce qu**'il contient un moyen pour limiter le nombre d'utilisations d'un logiciel (10) au sein d'un micro-ordinateur (2).

7. Support amovible de mémorisation électronique (4) selon l'une des revendications 4 à 6 **caractérisé en ce qu**'il est une carte à puce.

8. Support amovible de mémorisation électronique (4) selon l'une des revendications 4 à 6 **caractérisé en ce qu**'il eat une carte PCMCIA.

## Claims

1. Secure method of using a software program (10) on a microcomputer (2) consisting of inserting a removable electronic storage medium (4) containing secret data corresponding to user rights for the program in the microcomputer (2), **characterised in that** it consists of running the software (10), querying the storage medium (4) from time to time in order to check the user rights.

2. Secure method of using software (10) according to claim 1, **characterised in that** the removable electronic storage medium (4) also contains access rights for the software (10) allowing it to be downloaded from a server (1) before use.

3. Secure method of using software (10) according to one of the preceding claims, **characterised in that** the removable storage medium (4) comprises a counter indicating a limited number of authorized uses, this counter being decremented when the software (10) is run, the medium (4) checking the state of the counter before authorising the running of the software (10).

4. Removable electronic storage medium (4), **characterised in that** it contains secret data corresponding to user rights for a program (10) and **in that** it is capable of authorising the running of a program (10) in a microcomputer (2) according to these rights, querying the storage medium (4) from time to time in order to check the user rights:

5. Removable electronic storage medium (4) according to claim 4, **characterised in that** it also contains access rights for a program (10) authorising it to be downloaded from a server (1) onto a microcomputer (2).

6. Removable electronic storage medium (4) according to one of the claims 4 or 5, **characterised in that** it contains means for limiting the number of times a program (10) can be used in a microcomputer (2).

7. Removable electronic storage medium (4) according to one of the claims from 4 to 6, **characterised in that** it is a chip card.

8. Removable electronic storage medium (4) according to one of the claims from 4 to 6, **characterised in that** it is a PCMCIA card.

## Patentansprüche

1. Gesichertes Verfahren für die Benutzung einer Software (10) auf einem Mikrocomputer (2), das darin besteht, einen herausnehmbaren, elektronischen Speicherträger (4) einzufügen, der geheime Daten enthält, die Benutzungsrechten der Software in dem Mikrocomputer (2) entsprechen, **dadurch gekennzeichnet, dass** es darin besteht, die Software (10) auszuführen und dabei von Zeit zu Zeit den Speicherträger (4) zu befragen, um die Benutzungsrechte zu kontrollieren.

2. Gesichertes Verfahren für die Benutzung einer Software (10) nach Anspruch 1, **dadurch gekennzeichnet, dass** der herausnehmbare, elektronische Speicherträger (4) ferner die Zugangsrechte zur Software (10) enthält, um sie vor ihrer Benutzung von einem Server (1) herunter zu laden.

3. Gesichertes Verfahren für die Benutzung einer Software (10) nach einem der vorangehenden Ansprüche, **dadurch gekennzeichnet, dass** der herausnehmbare Speicherträger (4) einen Zähler umfasst, der eine begrenzte Anzahl von zugelassenen Benutzungen anzeigt, wobei dieser Zähler bei der Ausführung der Software (10) dekrementiert wird und wobei der Träger (4) den Zählerstand prüft, um die Ausführung der Software (10) zuzulassen oder nicht.

4. Herausnehmbarer, elektronischer Speicherträger (4), **dadurch gekennzeichnet, dass** er geheime Daten umfasst, die Benutzungsrechten einer Software (10) entsprechen, und dass er die Ausführung einer Software (10) innerhalb eines Mikrocomputers je nach diesen Rechten zulassen kann oder nicht, indem er von Zeit zu Zeit den Speicherträger (4) befragt, um die Benutzungsrechte zu kontrollieren.

5. Herausnehmbarer, elektronischer Speicherträger (5) nach Anspruch 4, **dadurch gekennzeichnet, dass** er ferner Zugangsrechte zur Software (10) enthält, um ihr Herunterladen von einem Server (1) in einen Mikrocomputer (2) zuzulassen oder nicht.

6. Herausnehmbarer, elektronischer Speicherträger (4) nach einem der Ansprüche 4 oder 5, **dadurch gekennzeichnet, dass** er ein Mittel enthält, um die Anzahl von Benutzungen einer Software (10) innerhalb eines Mikrocomputers (2) zu begrenzen.

7. Herausnehmbarer, elektronischer Speicherträger (4) nach einem der Ansprüche 4 bis 6, **dadurch gekennzeichnet, dass** es sich um eine Chipkarte handelt.

8. Herausnehmbarer, elektronischer Speicherträger (4) nach einem der Ansprüche 4 bis 6, **dadurch gekennzeichnet, dass** es sich um eine PCMCIA-Karte handelt.
